# EUROPEAN PATENT SPECIFICATION

(11) **EP 1 062 918 B1**
(45) Date of publication and mention of the grant of the patent: **11.01.2006**
(21) Application number: 00305326.1
(22) Date of filing: 22.06.2000
(51) Int. Cl.: A61C 19/00

(54) **Apparatus for cleaning dental equipment**
Reinigungsgerät für zahnärtzliche Ausrüstung
Appareil de nettoyage pour équipement dentaire

(30) Priority: 22.06.1999 GB 9914391
(43) Date of publication of application: 27.12.2000
(73) Proprietor: Jennings, Stanley Clifford, Epping, Essex CM16 4ER (GB)
(72) Inventor: Jennings, Stanley Clifford, Epping, Essex CM16 4ER (GB)
(74) Representative: Britter, Keith Palmer

(56) References cited:
- EP-A- 0 345 228
- EP-A- 0 481 663
- US-A- 5 137 689

## Description

This invention relates to a cleaner and, more specifically, to a sealed cleaner which may be utilised to clean sharp or dangerous objects.

Health-care workers, due to the nature of their employment, are often exposed to pathogens and other infectious organisms from the patients whom they treat and, therefore, are subjected to the possibility of contracting diseases. Indeed, it is well known that contact with such organisms represents a significant occupational hazard for such workers.

Infection of a health-care worker may occur either directly or indirectly. Direct infection involves the transmission of, for example, a pathogen to a health-care worker, via a cut or abrasion on the workers skin, from infected bodily fluids of a patient. A variety of blood-bome diseases may be transmitted in such a fashion, for example HIV and Hepatitis, and consequently, as our knowledge of such transmission has increased, health-care workers have become more conscious of such risks. Disposable gloves are now used and many surgical or medical devices are disposed of by incineration after a single use.

Indirect infection comes about through a pathway other than direct exposure to the infected bodily fluid of a patient. For example, a vector may provide the route of infection from its source to an individual. For health-care workers such vectors may include sharps, for example hypodermic needles, which can pierce the skin after they have been used and thereby infect the worker. In another case, a pathogen may become labile due to the medical procedure used and if, for example, the infection or its vector is vapourised during the procedure, it may be either directly ingested or may be deposited in such a position where it may be transmitted to a worker.

It is well known that in dental practices dentists and dental nurses, as well as orthodontists and dental hygienists, may, in the course of their duties, find themselves in situations in which there is a potential for the transmission of infectious agents. A small ulcer or wound in the mouth of, for example, a patient can be the source of an infection. Indeed, it has been well established that many of the micro-organisms which are present in the mouth are pathogenic and, although they are usually kept under control by the body's own defence mechanisms, this is not always the case. Therefore, any broken skin of the health-care worker, which comes into direct or indirect contact with such a wound, will allow the possibility of direct transmission of infection or of an infectious agent.

Furthermore, in dental practices there is an abundance of sharps which are routinely used and which are not disposable, that is to say, they are washed, disinfected, sterilised and then re-used. These, obviously, can provide a vector for indirect transmission as they may puncture the skin during use or whilst being cleaned. This route is therefore potentially serious and any attempt to mitigate this potential vector as a cause of infection is sought.

However, there is another route of infection in dental practice which is potentially serious. Dental spatter and aerosols are produced when tools such as air turbine handpieces, ultrasonic scalers and three-in-one syringes are used. Dental spatter is defined as airborne particles comprising water, bacteria and other particulate matter and it has been known to contain living tubercle bacteria. This spatter may be found anywhere from six inches to four feet from the equipment used. Aerosols may be suspended in the air for long periods of time due to their size range which is nominally of the order of 0.5 - 50 µm.

Although aerosols and dental spatter are produced whilst the equipment is in use, they may also be produced when the equipment is cleaned. Air powered tools are often connected to a pressure source in order to clean them and this can cause spatter. Also, it is known that conventional washing of infected or dirty equipment, such as by ultrasonic cleaning, can cause aerosol formation and spatter which may also spread infectious agents. In ultrasonic cleaners, for example, two pieces of equipment are often in contact with one another, such collisions can cause damage and, consequently, can be expensive. The cleaning of some equipment is not suitable for ultrasonic cleaning and, in such cases, occluded matter has to be scrubbed off of the equipment by hand. Obviously such an operation increases the likelihood of injury to the cleaner. Cleaned equipment is usually then placed in an autoclave where it is sterilised ready for its next use.

The cleaning of dental and surgical equipment prior to its sterilisation has been previously considered. For example MERCK & Co (WO 94/02179) proposed a two stage method in which items to be cleaned are soaked in an enzyme solution and then soaked in a solution containing a germicidal detergent microbiological decontaminating composition. The total soak time is preferably 20 minutes for each step giving a total preferred soak time of 40 minutes. However, the disclosed method indicates that the use of gluteraldehyde, a known irritant, is preferred and the method does not provide for rinsing of the so-cleaned items. Moreover, the cleaning effect relies upon the efficacy of the cleaning system used and does not provide for agitation of the items to so aid in their cleansing, hence the elevated soak times.

A.D.D. Co (WO 92/03171) have disclosed a hydro impact medical and dental instrument washer in which items to be cleaned are placed within holding means in a chamber, which is exposed to a turbulent flow of a liquid cleaning solution at a temperature in the range of 37 - 65 °C. The cleaning fluid is arranged to clean the items contained within the washer rather than to microbiologically disinfect them. Furthermore, the teachings do not provide for rinsing of the items once the matter has been removed therefrom and the provision of holding means ensures that a user handles the items subsequent to the cleaning process.

Castellini S.p.A have proposed apparatus for cleaning surgical instruments (EP 0345228) in which surgical instruments, or at least the portion of which thought to be contaminated, are immersed in a cleaning solution, preferably comprising glutaraldehyde. A turbulent flow of liquid is produced by a dedicated compressed air line which is plumbed into the apparatus. The turbulent liquid flow is pulsed which necessitates the use of complicated valve systems and so on. The washing liquid and air are supplied from sources external to the tank and a preferred washing step of five hours is required for sterilisation, the apparatus being operated in through-flow mode.

Siemens have suggested methods and apparatus for cleaning medical instruments (US 5723090 and US 5533539 respectively) in which items are cleaned by exposing them to a jet of cold water, followed by a jet of preheated water and cleaning the instruments with a heated water stream before lubricating and drying the items in a twenty minute cycle. Each of the fluids to which the items are exposed are supplied from dedicated external sources, necessitating the presence of sterile filters and oil separators for the air line, for example.

Therefore it is an object of the invention to provide a cleaner which prevents or, at least, substantially reduces the chance of infection when cleaning infected or at least potentially infected objects such as sharps other dental tools or surgical instruments and provides a safe method of carrying out such a cleaning operation whilst avoiding the problems associated with prior art cleaners, such as elevated cleaning times, the provision of external sources of cleaning materials necessitating dedicated supply lines and the like. Moreover, it is an object to provide a cleaner in which a minimum of materials are required to facilitate the cleaning of fouled or dirtied surgical instruments, such as relatively low water and power consumption.

It is a further object of the invention to provide a cleaner which can clean surgical instruments which have been previously located in a standard autoclave tray such that the operator need not come into contact with any such items after their use and until their storage prior to their next use.

Accordingly, the invention provides a dental equipment cleaning apparatus comprising a washing chamber, a washing tank arranged to supply the chamber with washing liquid, a rinsing tank arranged to supply the chamber with rinsing liquid and circulation means, wherein washing liquid is arranged to circulate by said circulation means around a circuit comprising the chamber for a given time period and drain means arranged to drain the chamber of liquid once circulation has ceased, and wherein said circulation means is arranged to circulate rinsing liquid introduced into the chamber from the rinsing tank.

The chamber may comprise a reservoir portion holding a volume of liquid during a respective cleaning cycle, and in which, in use, dental equipment to be cleaned is situated. Preferably the dental equipment is placed in a tray before it is placed in the reservoir. The tray may be autoclavable. Additionally, the washing liquid may comprise an enzyme and/or a bactericide and/or a surfactant and/or a disinfectant and the rinsing liquid may comprise a rinse aid.

The time period for each of the washing and rinsing cycles is preferably less than fifteen minutes, more preferably less than ten minutes and more preferably still less that five minutes duration. In a preferred embodiment the flow rate is such that all adhered or occluded matter is removed from the dental equipment within two minutes of commencement of the washing cycle.

Introducing means, preferably comprising jets, may be provided for introducing the respective liquids into the chamber. Also, means for heating the washing liquid and/or rinsing liquid and/or at least a portion of the chamber, may be included.

Further, there may be provided a method of cleaning dental equipment comprising providing apparatus in accordance with the invention, as defined above, placing dental equipment to be cleaned in the washing chamber (2), circulating washing liquid around a circuit comprising the chamber for a given time period, draining the chamber (2) of washing liquid once circulation has ceased and circulating rinsing liquid introduced into the chamber (2) subsequent to completion of washing.

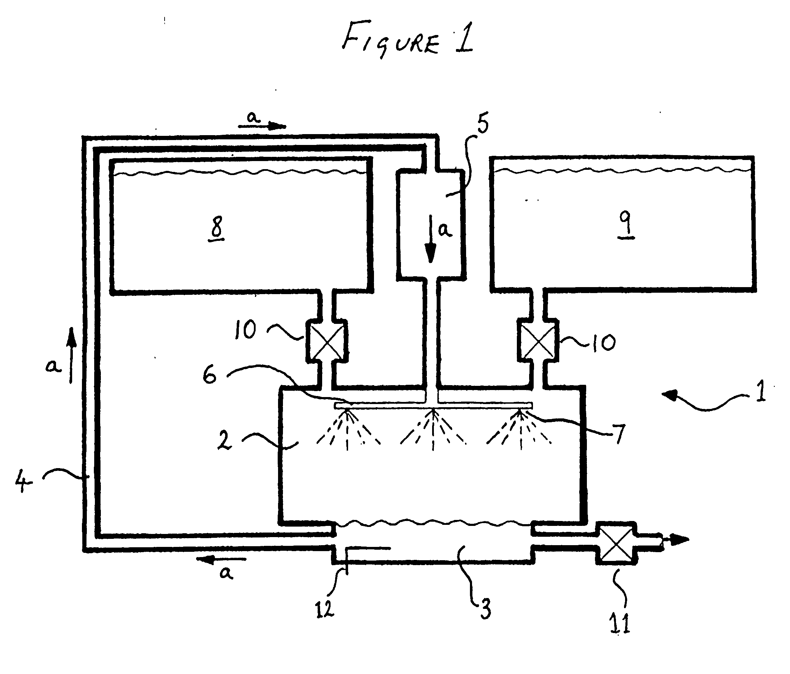

The invention will now be described with reference to the accompanying drawing which shows a schematic diagram of the cleaner.

A cleaner, generally shown at 1, comprises a washing chamber 2 with an integral reservoir portion 3. The bottom and the top of the chamber 2 are connected by a circuit 4 comprising a pump 5 which sucks liquid from the reservoir 3 and pumps it into the chamber 2, in the direction of arrows a, through introduction means 6 which may comprise a plurality of spray heads or jets 7.

The cleaner further comprises a wash tank 8 and a rinse tank 9 which are connected to the chamber 2 via respective valves 10, for example solenoid valves and a drain valve 11 which exhausts the reservoir 3 when operated.

In operation, items to be cleaned, such as dental handpieces, syringes or the like, or indeed other surgical instruments and medical equipment, are placed on a tray immediately after use. A lid is placed on the tray sealing the items therein and the tray may be stored before cleaning. The tray is placed in the reservoir portion 3 of the chamber 2 with its lid removed and the door to the chamber 2 is shut and a cleaning cycle is started.

The valve 10 associated with the wash tank 8 opens and washing liquid fills the reservoir 3. The pump 5 is then activated and circulates the washing liquid around the circuit 4. At the end of a pre-set time period, which is preferably about two minutes, the pump 5 is deactivated and the drain valve 11 is opened, thereby draining the reservoir portion 3 of the washing liquid contained therein. The dirtied washing liquid, once evacuated, may be stored for disposal, filtered or otherwise treated and re-used, simply re-used or directly sent to waste.

Once the reservoir portion 3 is drained of dirtied washing liquid the drain valve 11 is closed and the valve 10 associated with the rinse tank 9 is opened. Rinsing liquid then fills the reservoir portion 3 to a pre-set level, at which time the valve 10 is closed and the pump 5 is activated to circulate the rinsing liquid around the circuit 4. At the end of a further pre-set time period, the pump 5 is deactivated and the drain valve 11 is activated thereby draining the reservoir 3 of rinsing fluid. The so-drained rinsing fluid may be similarly treated subsequent to its evacuation from the reservoir 3.

An operator may then open the door to the chamber 2 and remove the tray with the cleaned items therein. The tray can then be placed in an autoclave, or other suitable means, where the items will be sterilised. The tray can then be removed from the sterilisation means and the items are conveniently ready for use.

This cleaner obviously provides for a situation in which medical equipment, for example, is placed in the tray immediately after use and is then cleaned and sterilised, such that it is in a condition suitable for re-use, without anyone having to touch a single item. This substantially reduces the risk of sharps injuries and completely removes the opportunity for taking up of infectious agents spread through spatter from ultrasonic cleaners.

Furthermore the inventive cleaner also provides a cheap, easily usable alternative to the systems currently employed and can be installed with nothing more than a supply of fluid and power.

The washing fluid may comprise an enzyme solution, a bactericide, a disinfectant or a surfactant to help in the cleaning process and the rinsing fluid may contain a rinse aid to help in the removal of liquid from the items.

Indeed, in a preferred embodiment a bespoke enzyme solution, comprising one or more enzymes, which digests or breaks down any adhered matter is used. The solution may additionally or alternatively comprise a disinfectant to provide further microbiological decontamination of the items placed within the cleaner. The combination of the cleaning solution coupled with the action of the spray heads or jets 7 provides a fast and effective method of disinfecting surgical instruments.

The pump 5 is of a power that flow rates around the circuit 4 are such that extensive cleaning and rinsing is undertaken during a respective two minute cycle. Under such conditions, any occluded or adhered matter may be removed from any items placed in the cleaner although the time period for each of the washing and rinsing cycles can be altered to suit the conditions of use. Furthermore the cleaner may also comprise a heater 12 to heat any or all of the wash 8 and rinse 9 tanks or the reservoir 3 to promote the cleaning effect of the cleaner. It has been found that heating the washing fluid to around 80 °C is particularly efficacious in cleaning medical and other equipment.

The introduction means 6 may comprise any number of spray heads or jets 7 which may impinge on the items to be cleaned from any direction, for example, at directions orthogonal from that shown in the diagram.

Moreover, the size of the reservoir 3 can be of a size such that a number of trays can be placed therein. For example retaining sliders can be fitted such that each pair of sliders supports one of a plurality of vertically situated trays to be accommodated within the reservoir and the trays may also be horizontally situated with respect to one another.

Each of the functions of the cleaner may be controlled from an instrumental panel on the front of the machine. This enables an operator to select from a range of pre-determined washing cycles or programs or to manually select the time for each of the washing and rinsing cycles and a number of other parameters. For example, a particular type of instrument may require a greater flow rate of liquid or a higher operating temperature, or indeed a double wash cycle using two tanks of washing liquid with different washing liquids in each. All of the functions are controllable from the control panel.

Thus, there is provided an easy to use cleaner with minimal installation costs and low overheads and one which substantially reduces the possibility of injury to an operator whilst cleaning.

## Claims

1. A dental equipment cleaning apparatus (1) comprising a washing chamber (2), a washing tank (8) arranged to supply the chamber (2) with washing liquid, a rinsing tank (9) arranged to supply the chamber (2) with rinsing liquid and circulation means (4, 5), wherein washing liquid is arranged to circulate by said circulation means (4, 5) around a circuit comprising the chamber (2) for a given time period and drain means (11) arranged to drain the chamber (2) of liquid once circulation has ceased, and wherein said circulation means (4, 5) is arranged to circulate rinsing liquid introduced into the chamber (2) from the rinsing tank (9) subsequent to completion of the washing cycle.

2. Apparatus (1) according to claim 1, wherein the chamber (2) comprises a reservoir portion (3) holding a volume of liquid during a respective cleaning cycle, and in which, in use, dental equipment to be cleaned is situated.

3. Apparatus (1) according to claim 2 further comprising a tray which is located or locatable within the reservoir (3) and in which, in use, the dental equipment is placed or placeable.

4. Apparatus (1) according to claim 3, wherein the tray is an autoclavable tray.

5. Apparatus (1) according to any preceding claim, wherein the washing liquid comprises an enzyme and/or a bactericide and/or a surfactant and/or a disinfectant.

6. Apparatus (1) according to any preceding claim, wherein the rinsing liquid comprises a rinse aid.

7. Apparatus (1) according to any preceding claim, wherein the time period for each of the washing and rinsing cycles is less than fifteen minutes, more preferably less than ten minutes and more preferably still less that five minutes duration.

8. Apparatus (1) according to any preceding claim further comprising introducing means (6) to introduce the respective liquids into the chamber (2).

9. Apparatus (1) according to claim 8, wherein said introducing means (6) comprises jets (7).

10. Apparatus (1) according to any preceding claim, wherein the flow rate of washing liquid is such that all occluded or adhered matter is removed from the dental equipment within two minutes of commencement of the washing cycle.

11. Apparatus (1) according to any preceding claim further comprising heating means (12) arranged to heat the washing liquid and/or rinsing liquid and/or at least a portion of the chamber (2).

12. A method of cleaning dental equipment comprising providing apparatus according to any preceding claim, placing dental equipment to be cleaned in the washing chamber, circulating washing liquid around a circuit comprising the chamber for a given time period, draining the chamber of washing liquid once circulation has ceased and circulating rinsing liquid introduced into the chamber subsequent to completion of washing.

## Revendications

1. Appareil de nettoyage d'instruments dentaires (10) comprenant une chambre de nettoyage (2), un réservoir de lavage (8) disposé pour alimenter la chambre (2) en liquide de lavage, un reservoir de rinçage (9) disposé pour alimenter la chambre (2) en liquide de rinçage et des moyens de circulation (4, 5), dans lequel le liquide de lavage est disposé pour circuler par lesdits moyens de circulation (4, 5) dans un circuit comprenant la chambre (2) selon un temps donné et des moyens de vidange (11) disposés de façon à vidanger la chambre (2) du liquide, une fois que la circulation a cessé, et dans lequel lesdits moyens de circulation (4, 5), sont disposés pour faire circuler le liquide de rinçage introduit dans la chambre (2) depuis le réservoir de rinçage (9) une fois que le cycle de lavage est terminé.

2. Appareil (1) selon la revendication 1, dans lequel ia chambre (2) comprend une partie réservoir (3) contenant un volume de liquide pendant un cycle de nettoyage respectif, et dans lequel, pendant l'utilisation, les instruments dentaires à nettoyer sont placés.

3. Appareil (1) selon la revendication 2, comprenant également un plateau qui est situé ou qui peut être situé à l'intérieur du réservoir (3) et sur lequel, pendant l'utilisation, les instruments dentaires sont placés ou peuvent être placés.

4. Appareil (1) selon la revendication 3, dans lequel le plateau est un plateau autoclavable.

5. Appareil (1) selon l'une des revendications précédentes, dans lequel le liquide de lavage comprend une enzyme et/ou un bactéricide et/ou un surfactant et/ou un désinfectant.

6. Appareil (1) selon rune des revendications précédentes, dans lequel le liquide de rinçage comprend une aide au rinçage.

7. Appareil (1) selon l'une des revendications précédentes, dans lequel la période de temps pour chacun des cycles de lavage et de rinçage est inférieure à quinze minutes, de préférence inférieure à dix minutes, et encore mieux, inférieure à cinq minutes.

8. Appareil (1) selon l'une des revendications précédentes, comprenant en outre des moyens d'introduction (6), pour introduire les liquides respectifs dans la chambre (2).

9. Appareil (1) selon la revendication 8. dans lequel lesdits moyens d'introduction (6) comprennent des gicleurs (7)

10. Appareil (1) selon l'une des revendications précédentes, dans lequel le débit du liquide de lavage est tel que toute matière occluse ou adhérente est éliminée des instruments dentaires dans les deux minutes suivant le début du cycle de nettoyage.

11. Appareil (1) selon l'une des revendications précédentes, comprenant en outre des moyens de chauffage (12) disposés de façon à chauffer le liquide de lavage et/ou le liquide de rinçage etlou au moins une partie de la chambre (2).

12. Méthode de nettoyage des instruments dentaires comprenant la fourniture d'un appareil selon l'une des revendications précédentes, le positionnement des instruments dentaires à nettoyer dans la chambre de nettoyage, la circulation du liquide de lavage dans un circuit comprenant la chambre selon un temps donné, la vidange du liquide de lavage de la chambre une fois que la circulation est terminée et la circulation d'un liquide de rinçage introduit dans la chambre après la fin du lavage.

## Patentansprüche

1. Reinigungsgerät (1) für zahnärztliche Ausrüstung, umfassend eine Waschkammer (2), einen zur Belieferung der Kammer (2) mit einer Waschflüssigkeit ausgebildeten Waschbehälter (8), einen zur Belieferung der Kammer (2) mit einer Spülflüssigkeit ausgebildeten Spülbehälter (9), Mittel zur Umwälzung, wobei die Waschflüssigkeit mithilfe der Mittel (4, 5) zur Umwälzung zur Zirkulation in einem die Kammer (2) für eine vorgegebene Zeit umfassenden Kreislauf vorgesehen ist, und Mittel (11) zur Trocknung der Kammer (2), wenn die Umwälzung beendet ist, wobei die Mittel (4, 5) zur Umwälzung zur Zirkulation der aus dem Spülbehälter (9) in die Kammer (2) geführten Spülflüssigkeit im Anschluss an den Waschzyklus ausgebildet sind.

2. Reinigungsgerät (1) gemäß Patentanspruch 1, wobei die Kammer (2) einen Behälterabschnitt (3) zur Aufnahme eines Flüssigkeitsvolumens während eines einzelnen Reinigungszyklus aufweist, in dem zahnärztliche Ausrüstung während des Betriebs zur Reinigung angeordnet ist.

3. Reinigungsgerät (1) gemäß Patentanspruch 1, weiter umfassend eine Ablage, weiche zwischen dem Behälter (3) angeordnet oder anordenbar ist, und in welcher zahnärztliche Ausrüstung während des Betriebs angeordnet ist.

4. Reinigungsgerät (1) gemäß Patentanspruch 3, wobei die Ablage eine autoklavierbare Ablage ist.

5. Reinigungsgerät (1) gemäß einem der vorhergehenden Patentansprüche, wobei die Waschflüssigkeit ein Enzym und/oder ein Bakterizid und/oder ein Tensid und/oder ein Desinfektionsmittel umfasst.

6. Reinigungsgerät (1) gemäß einem der vorhergehenden Patentansprüche, wobei die Spülflüssigkeit ein Spülmittel umfasst.

7. Reinigungsgerät (1) gemäß einem der vorhergehenden Patentansprüche, wobei die Zeitperiode für jeden Reinigungszyklus und spülen Zyklus kürzer ist als 15 Minuten, vorzugsweise kürzer als 10 Minuten und noch bevorzugter weniger als 5 Minuten.

8. Reinigungsgerät (1) gemäß einem der vorhergehenden Patentansprüche, weiter umfassend Zuführmittel (6) zum Zuführen der entsprechenden Flüssigkeit in die Kammer (2).

9. Reinigungsgerät (1) gemäß Patentanspruch 8, wobei die für Zuführmittel (6) eine Düse (7) umfassen.

10. Reinigungsgerät (1) gemäß einem der vorhergehenden Patentansprüche, wobei der Durchfluss der Waschflüssigkeit derart ist, dass verstopfte oder verklebte Materie von der zahnärztlichen Ausrüstung innerhalb von 2 Minuten vom Beginn des Reinigungszyklus entfernt wird.

11. Reinigungsgerät (1) gemäß einem der vorhergehenden Patentansprüche, weiter umfassend Heizmittel (12), welche zum Heizen der Waschflüssigkeit und/oder Spülflüssigkeit und/oder wenigstens eines Abschnitts der Kammer (2) angeordnet sind.

12. Reinigungsverfahren für eine ärztliche Ausrüstung, umfassend ein Reinigungsgerät gemäß einem der vorhergehenden Patentansprüche, ein Anordnen der zahnärztlichen Ausrüstung zum Reinigen in der Waschkammer, ein Umwälzen der Waschflüssigkeit in einem Kreislauf, welcher für eine vorgegebene Zeitdauer die Kammer umfasst, Trocknung der Kammer von der Waschflüssigkeit, sobald die Umwälzung beendet ist, und ein Umwälzen der Spülflüssigkeit, weiche in die Kammer im Anschluss der Reinigung zugeführt wird.
